# EUROPEAN PATENT APPLICATION

(11) **EP 4 797 369 A1**
(43) Date of publication of application: **26.08.2026**
(21) Application number: 25198203.9
(22) Date of filing: 26.08.2025
(51) Int. Cl.: H01M 10/0525, H01M 10/0569

(54) **ELECTROLYTE FOR HIGH-VOLTAGE LITHIUM-ION BATTERY, AND PREPARATION METHOD AND USE THEREOF**

(30) Priority: 20.02.2025 CN 202510191628
(71) Applicant: Jilin Dongchi New Energy Technology Co., Ltd, Changchun City, Jilin Province 130000 (CN)
(72) Inventor: XIE, Haiming, Changchun City, Jilin Province, 130000 (CN); LIU, Jun, Changchun City, Jilin Province, 130000 (CN); WANG, Jinyi, Changchun City, Jilin Province, 130000 (CN)
(74) Representative: Porta & Consulenti Associati S.p.A.

(57) **Abstract**

The present disclosure belongs to the technical field of lithium-ion batteries, and in particular relates to an electrolyte for a high-voltage lithium-ion battery, and a preparation method and use thereof. The electrolyte for the high-voltage lithium-ion battery includes: a lithium salt, a carboxylate-based organic solvent, and an electrolyte additive; where the carboxylate-based organic solvent includes at least one selected from the group consisting of a linear carboxylate and a cyclic carboxylate. The electrolyte for the high-voltage lithium-ion battery exhibits high thermal stability and high-voltage stability against lithium. When being applied in high-voltage lithium-ion batteries, the electrolyte for the high-voltage lithium-ion battery enhances cycle life and storage life of the high-voltage lithium-ion batteries.

## Description

### TECHNICAL FIELD

The present disclosure belongs to the technical field of lithium-ion batteries, and in particular relates to an electrolyte for a high-voltage lithium-ion battery, and a preparation method and use thereof.

### BACKGROUND

Due to the advantages such as high operating voltage and energy density, low self-discharge rate, absence of memory effect, long cycle life, and environmental friendliness, lithium-ion batteries are widely used in various fields of daily life, including various portable electronic devices and electric vehicles. The lithium-ion batteries are generally classified into high-voltage batteries and conventional-voltage batteries based on upper charging limit voltage. The upper charging limit voltage for the conventional-voltage lithium-ion batteries is typically 4.2 V, and is 4.35 V or 4.4 V for high-voltage lithium-ion batteries.

Currently, liquid electrolytes used in commercialized lithium-ion batteries generally employ lithium hexafluorophosphate (LiPF₆) as a conductive salt and a mixture composed of high-viscosity, high-dielectric-constant solvents like ethylene carbonate (EC) and propylene carbonate (PC), combined with low-viscosity, low-dielectric-constant solvents such as dimethyl carbonate (DMC), diethyl carbonate (DEC), or ethyl methyl carbonate (EMC). Although such liquid electrolytes have found widespread application, they possess the following defects that hinder the use in high-voltage lithium-ion batteries: (1) LiPF₆ exhibits poor thermal and chemical stability; particularly at low temperatures, LiPF₆ is prone to crystallization or solidification and viscosity elevation, leading to a sharp decline in conductivity and a rapid increase in the interface impedance between the electrolyte and electrodes, and then causing the battery to malfunction. (2) When the system voltage exceeds 4.5 V, conventional carbonate-based electrolyte solvents like EC will decompose, resulting in degraded battery performance.

### SUMMARY

In view of this, the present disclosure is intended to provide an electrolyte for a high-voltage lithium-ion battery, and a preparation method and use thereof. The electrolyte for the high-voltage lithium-ion battery exhibits high thermal stability and high-voltage stability against lithium. When being applied in high-voltage lithium-ion batteries, the electrolyte for the high-voltage lithium-ion battery enhances cycle life and storage life of the high-voltage lithium-ion batteries.

To achieve the above object, the present disclosure provides the following technical solutions:
The present disclosure provides an electrolyte for a high-voltage lithium-ion battery, including: a lithium salt, a carboxylate-based organic solvent, and an electrolyte additive; where
the carboxylate-based organic solvent includes at least one selected from the group consisting of a linear carboxylate and a cyclic carboxylate; where
the linear carboxylate has a structure shown in Formula I, and the cyclic carboxylate has a structure shown in Formula II; 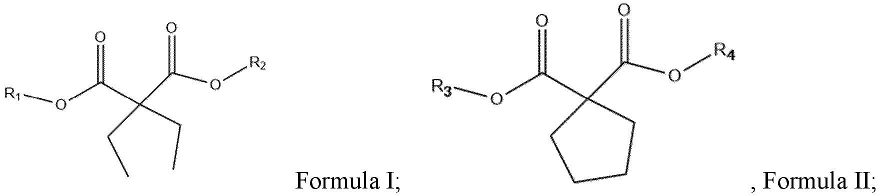
where R₁, R₂, R₃, and R₄ are independently C1-C5 alkyl;
the electrolyte additive includes at least one selected from the group consisting of an ethylene carbonate (EC) derivative, propane sultone, and ethylene sulfate; and
the lithium salt includes at least one selected from the group consisting of lithium tetrafluoroborate, lithium bis(fluorosulfonyl)imide (LiFSI), lithium bis(trifluoromethanesulfonyl)imide (LiTFSI), lithium hexafluoroarsenate, lithium perchlorate, lithium bis(oxalato)borate (LiBOB), and lithium difluoro(oxalato)borate (LiODFB).

In some embodiments, R₁, R₂, R₃, and R₄ are independently C1-C3 alkyl.

In some embodiments, the ethylene carbonate derivative includes at least one selected from the group consisting of vinylene carbonate (VC), fluoroethylene carbonate (FEC), difluoroethylene carbonate (DFEC), and vinyl ethylene carbonate (VEC).

In some embodiments, the lithium salt includes at least one selected from the group consisting of the LiTFSI, the LiBOB, and the LiODFB.

In some embodiments, the electrolyte for the high-voltage lithium-ion battery has a mass fraction of the lithium salt of 15% to 40%, a mass fraction of the carboxylate-based organic solvent of 40% to 80%, and a mass fraction of the electrolyte additive of 5% to 30%.

In some embodiments, the electrolyte for the high-voltage lithium-ion battery has the mass fraction of the lithium salt of 15% to 30%, the mass fraction of the carboxylate-based organic solvent of 40% to 70%, and the mass fraction of the electrolyte additive of 10% to 20%.

The present disclosure further provides a method for preparing the electrolyte for the high-voltage lithium-ion battery as described above, including:
mixing the lithium salt, the carboxylate-based organic solvent, and the electrolyte additive in a protective atmosphere to obtain the electrolyte for the high-voltage lithium-ion battery.

In some embodiments, the mixing the lithium salt, the carboxylate-based organic solvent, and the electrolyte additive is conducted by: mixing the carboxylate-based organic solvent and the electrolyte additive, and then adding the lithium salt thereto, and mixing a resulting system with stirring at a temperature of 60°C to 80°C at a rotational speed of 300 rpm to 600 rpm.

The present disclosure further provides use of the electrolyte for the high-voltage lithium-ion battery as described above or the electrolyte for the high-voltage lithium-ion battery prepared by the method as described above in a high-voltage lithium-ion battery.

The present disclosure further provides a high-voltage lithium-ion battery, including a cathode, an anode, and an electrolyte, where the electrolyte is the electrolyte for the high-voltage lithium-ion battery as described above or the electrolyte for the high-voltage lithium-ion battery prepared by the method as described above.

The present disclosure provides an electrolyte for a high-voltage lithium-ion battery, including: a lithium salt, a carboxylate-based organic solvent, and an electrolyte additive; where
the carboxylate-based organic solvent includes at least one selected from the group consisting of a linear carboxylate and a cyclic carboxylate; where
the linear carboxylate has a structure shown in Formula I, and the cyclic carboxylate has a structure shown in Formula II; 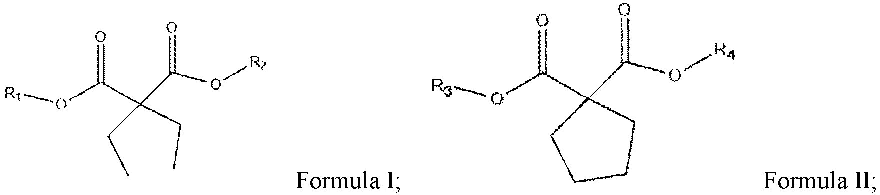
where R₁, R₂, R₃, and R₄ are independently C1-C5 alkyl;
the electrolyte additive includes (is) at least one selected from the group consisting of an EC derivative, propane sultone, and ethylene sulfate; and
the lithium salt includes (is) at least one selected from the group consisting of lithium tetrafluoroborate, LiFSI, LiTFSI, lithium hexafluoroarsenate, lithium perchlorate, LiBOB, and LiODFB.

Conventional ester-based electrolytes face compatibility issues with lithium metal anodes. For instance, diethyl malonate exhibits poor reductive stability and readily reacts with lithium metal due to the presence of active α-hydrogen atoms (active α-H). In contrast, in the present disclosure, the carboxylate-based organic solvent in the electrolyte for the high-voltage lithium-ion battery does not contain active α-H and exhibits weak interaction with lithium cations, thereby significantly enhancing reductive stability against lithium metal at high voltages and mitigating anode compatibility issues. Consequently, the electrolyte for the high-voltage lithium-ion battery not only enables stable, dendrite-free lithium plating/stripping but also improves the cycle life and storage life of high-voltage lithium-ion batteries. Experimental results demonstrate that the electrolyte for the high-voltage lithium-ion battery achieves an anodic stability of up to 5.4 V (vs. Li/Li⁺) even at a low salt concentration of 1.5 M, making it particularly suitable for high-voltage lithium-ion batteries operating above 4.5 V.

### BRIEF DESCRIPTION OF THE DRAWINGS

FIG. 1 shows the electrochemical float test results of the electrolyte for the high-voltage lithium-ion battery prepared in Example 17;
FIG. 2 shows the thermogravimetric analysis (TGA) results of diethyl 1,1-cyclopentanedicarboxylate (DECPDC) (cyclic carboxylate);
FIG. 3 shows the TGA results of an electrolyte formulated by using cyclic carboxylate DECPDC as the organic solvent; and
FIG. 4 shows the cycling stability of an NCM811-Li coin cell assembled with the electrolyte for the high-voltage lithium-ion battery prepared in Example 17.

### DETAILED DESCRIPTION OF THE EMBODIMENTS

The present disclosure provides an electrolyte for a high-voltage lithium-ion battery, including: a lithium salt, a carboxylate-based organic solvent, and an electrolyte additive; where
the carboxylate-based organic solvent includes at least one selected from the group consisting of a linear carboxylate and a cyclic carboxylate;
the linear carboxylate has a structure shown in Formula I, and the cyclic carboxylate has a structure shown in Formula II; 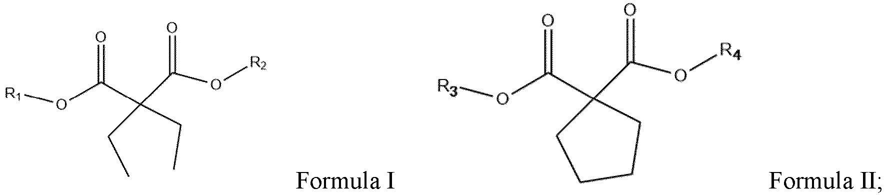
where R₁, R₂, R₃, and R₄ are independently C1-C5 alkyl;
the electrolyte additive includes (is) at least one selected from the group consisting of an EC derivative, propane sultone, and ethylene sulfate; and
the lithium salt includes (is) at least one selected from the group consisting of lithium tetrafluoroborate, LiFSI, LiTFSI, lithium hexafluoroarsenate, lithium perchlorate, LiBOB, and LiODFB.

In the present disclosure, unless otherwise specified, there are no special requirements for sources of the used raw materials, and commercially-available products well known to those skilled in the art may be adopted.

In the present disclosure, the electrolyte for the high-voltage lithium-ion battery includes a lithium salt.

In one embodiment, the lithium salt includes (is) at least one selected from the group consisting of lithium tetrafluoroborate, LiFSI, LiTFSI, lithium hexafluoroarsenate, lithium perchlorate, LiBOB, and LiODFB. In another embodiment, the lithium salt is at least one selected from the group consisting of the LiTFSI, the LiBOB, and the LiODFB. In a specific embodiment, the lithium salt is the LiTFSI.

The primary functions of the lithium salt are to provide lithium ions and transport the lithium ions between cathode and anode. The lithium salt critically determines the electrolyte's physical and chemical properties, including ionic mobility, dissociation constant, solubility, thermal stability, chemical stability, and solid electrolyte interphase (SEI) film-forming capability. While increasing lithium salt concentration within an appropriate range enhances ionic conductivity, excessive concentration increases cost and elevates viscosity, thereby reducing conductivity. Electrolyte additives are minor quantities of natural or synthetic organic/inorganic compounds that typically do not participate in electrode reactions. The electrolyte additives improve the electrochemical performance of the electrolyte system, optimize ion discharge conditions, and promote more efficient electrolysis. Though being used in small amounts, the electrolyte additives are indispensable components of the electrolyte system.

In the present disclosure, the electrolyte for the high-voltage lithium-ion battery includes a carboxylate-based organic solvent.

In one embodiment, the carboxylate-based organic solvent includes a linear carboxylate and/or cyclic carboxylate. In a specific embodiment, the carboxylate-based organic solvent is the cyclic carboxylate.

In some embodiments, the linear carboxylate has a structure shown in Formula I, and the cyclic carboxylate has a structure shown in Formula II; 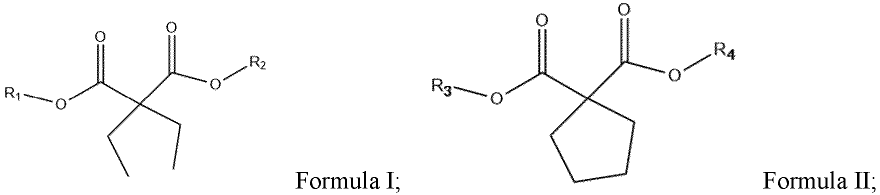 where R₁, R₂, R₃, and R₄ are independently C1-C5 alkyl, specifically C1-C3 alkyl in specific embodiments.

In specific embodiments, the carboxylate-based organic solvent is DECPDC.

The carboxylate-based organic solvent not only effectively dissolves lithium salts but also provides favorable ion transport properties, thereby enhancing the energy density and power density of batteries for high-voltage lithium-ion battery applications.

In the present disclosure, the electrolyte for the high-voltage lithium-ion battery includes an electrolyte additive.

In one embodiment, the electrolyte additive includes (is) at least one selected from the group consisting of an EC derivative, propane sultone, and ethylene sulfate. In specific embodiments, the electrolyte additive is the EC derivative or FEC (DTD). In some embodiments, the EC derivative is at least one selected from the group consisting of VC, FEC, DFEC, and VEC, specifically the VC or the FEC in specific embodiments. In some embodiments, the propane sultone (PS) is 1,3-propane sultone (1,3-PS).

Electrolyte additives could improve the electrochemical performance of the electrolyte and enhance cathode deposition quality. The electrolyte additives generally do not participate in electrode reactions during electrolysis but optimize the electrochemical properties of the electrolyte system, influence ion discharge conditions, and promote more efficient electrolysis. Though being used in small amounts, the electrolyte additives are indispensable components of the electrolyte system.

In one embodiment, the electrolyte for the high-voltage lithium-ion battery has a mass fraction of the lithium salt of 15% to 40%, a mass fraction of the carboxylate-based organic solvent of 40% to 80%, and a mass fraction of the electrolyte additive of 5% to 30%. In another embodiment, the electrolyte for the high-voltage lithium-ion battery has the mass fraction of the lithium salt of 15% to 30%, the mass fraction of the carboxylate-based organic solvent of 40% to 70%, and the mass fraction of the electrolyte additive of 10% to 20%. In specific embodiments, the electrolyte for the high-voltage lithium-ion battery has the mass fraction of the lithium salt of 26.6%, the mass fraction of the carboxylate-based organic solvent of 51.1%, and the mass fraction of the electrolyte additive of 22.5%.

The present disclosure further provides a method for preparing the electrolyte for the high-voltage lithium-ion battery as described above, including:
mixing the lithium salt, the carboxylate-based organic solvent, and the electrolyte additive in a protective atmosphere to obtain the electrolyte for the high-voltage lithium-ion battery.

In one embodiment, the protective atmosphere is nitrogen; and the protective atmosphere is provided by a glovebox filled with high-purity argon, where moisture and oxygen levels are controlled not greater than 5 ppm at room temperature.

In one embodiment, the mixing the lithium salt, the carboxylate-based organic solvent, and the electrolyte additive is conducted by: mixing the carboxylate-based organic solvent and the electrolyte additive, and then adding the lithium salt thereto, and stirring a resulting mixture; where the stirring is conducted at a temperature of 60°C to 80°C, specifically the temperature of 65°C to 75°C in specific embodiments; and the stirring is conducted at a rotation speed of 300 rpm to 600 rpm, specifically the rotation speed of 400 rpm to 500 rpm in specific embodiments. The stirring is not specifically limited in duration and continues until homogeneous mixing is achieved.

The present disclosure further provides use of the electrolyte for the high-voltage lithium-ion battery as described above or the electrolyte for the high-voltage lithium-ion battery prepared by the method as described above in a high-voltage lithium-ion battery.

The present disclosure further provides a high-voltage lithium-ion battery, including a cathode, an anode, and an electrolyte, where the electrolyte is the electrolyte for the high-voltage lithium-ion battery as described above or the electrolyte for the high-voltage lithium-ion battery prepared by the method as described above.

In one embodiment, an active material of the cathode is selected from the group consisting of lithium cobalt oxide, lithium manganese oxide, lithium iron phosphate, and ternary material NCM811, specifically the ternary material NCM811 in specific embodiments. In some embodiments, an active material of the anode is selected from the group consisting of graphite, silicon-carbon composite, and lithium metal, specifically the lithium metal in specific embodiments.

In one embodiment, an operating voltage of the high-voltage lithium-ion battery exceeds 4.5 V.

The technical solutions in the present disclosure will be described below clearly and completely with reference to the examples in the present disclosure, but they shall not be construed as limiting the scope of the present disclosure.

### Examples 1 to 17 and Comparative Examples 1 to 2

A preparation method was performed as follows: In a glovebox filled with high-purity argon, where moisture and oxygen levels were controlled not greater than 5 ppm at room temperature, a carboxylate-based organic solvent and an electrolyte additive were mixed. Then, a lithium salt was added thereto slowly, and a resulting mixture was stirred at 70°C with a rotational speed of 500 rpm until homogeneous. A resulting electrolyte had specific components and contents as detailed in Tables 1 to 3.

### Performance Testing

(1) The performance of electrolytes from Examples 1 to 17 and Comparative Examples 1 to 2 was evaluated by using coin cells with NCM811 ternary material as the cathode and lithium metal as the anode. Electrochemical properties assessed included: ionic conductivity, electrochemical stability window, and cycling performance. The ionic conductivity was calculated from the impedance of assembled steel/steel full cell, the electrochemical stability window was measured via linear sweep voltammetry (LSV) by using steel/lithium full cell, and the cycling performance was tested at 0.5C charge/discharge rate, and capacity retention after one hundred cycles was recorded for comparison. Results are shown in Tables 1 to 3.

**Table 1 Composition and performance of electrolytes containing cyclic carboxylates (Examples 1 to 10)**

| Example | Mass fraction | | | Electrochemical stability window (V) | Ionic conductivity σ (mS·cm⁻¹) |
|---|---|---|---|---|---|
| | LiTFSI | DECPDC | FEC | | |
| Example 1 | 26.2% | 44.4% | 29.4% | 5.0 | 1.56 |
| Example 2 | 26.3% | 51.0% | 22.7% | 5.2 | 1.48 |
| Example 3 | 27.0% | 54.9% | 18.1% | 5.4 | 1.30 |
| Example 4 | 27.1% | 57.6% | 15.3% | 5.6 | 1.10 |
| Example 5 | 27.6% | 64.0% | 8.4% | 5.6 | 0.77 |
| Example 6 | 27.8% | 66.3% | 5.9% | 5.2 | 0.99 |
| Example 7 | 10.8% | 61.8% | 27.4% | 5.2 | 0.52 |
| Example 8 | 19.5% | 55.8% | 24.7% | 5.2 | 1.30 |
| Example 9 | 26.6% | 51.1% | 22.3% | 5.2 | 1.48 |
| Example 10 | 32.7% | 46.7% | 20.6% | 5.2 | 1.04 |

**Table 2 Composition and performance of electrolytes containing linear carboxylates (Examples 11 to 16)**

| Example | Mass fraction | | | Electrochemical stability window (V) | Ionic conductivity σ (mS·cm⁻¹) |
|---|---|---|---|---|---|
| | LiTFSI | Diethyl diethylmalonate | FEC | | |
| Example 11 | 20.1% | 46.1% | 33.8% | 5.0 | 1.56 |
| Example 12 | 20.6% | 53.1% | 26.3% | 5.1 | 1.64 |
| Example 13 | 21.0% | 57.8% | 21.2% | 5.2 | 1.32 |
| Example 14 | 21.2% | 60.9% | 17.9% | 5.3 | 1.14 |
| Example 15 | 21.8% | 68.2% | 10.0% | 5.2 | 0.77 |
| Example 16 | 20.0% | 69.9% | 10.1% | 5.0 | 0.53 |

**Table 3 Composition and performance of electrolytes (Example 17 and Comparative Examples 1 to 2)**

| Example | Mass fraction | | | Capacity retention |
|---|---|---|---|---|
| | LiTFSI | DECPDC | FEC | |
| Example 17 Test 1 | 26.6% | 51.1% | 22.3% | 96% |
| Example 17 Test 2 | 26.6% | 51.1% | 22.3% | 96% |
| Example 17 Test 3 | 26.6% | 51.1% | 22.3% | 95% |
| Comparative Example 1 | 29.3% | 46.0% (ethyl acetate) | 24.7% | 85% |
| Comparative Example 2 | 25.5% | 53.0% (carbonate) | 21.5% | 75% |

As demonstrated in Tables 1 to 3, the carboxylate-based organic solvent in the electrolyte for the high-voltage lithium-ion battery exhibits high electrochemical stability within the operating voltage range and exists stably in the electrolyte, shows desirable compatibility with cathode materials and lithium metal, and significantly improves cycling performance, cycle life, and storage life of batteries.

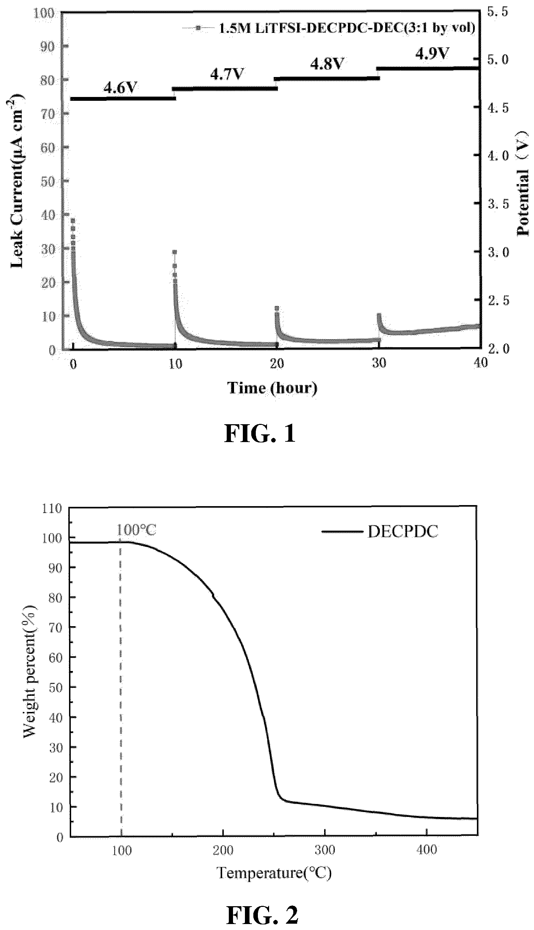

(2) A coin cell prepared with the electrolyte from Example 17, NCM811 cathode, and Li-metal anode was tested. FIG. 1 shows the electrochemical float test results of the electrolyte for a high-voltage lithium-ion battery in Example 17.

As evidenced by FIG. 1, the electrolyte demonstrates high electrochemical stability window and superior stability against lithium metal, confirming its suitability for high-voltage lithium-ion batteries operating above 4.5 V.

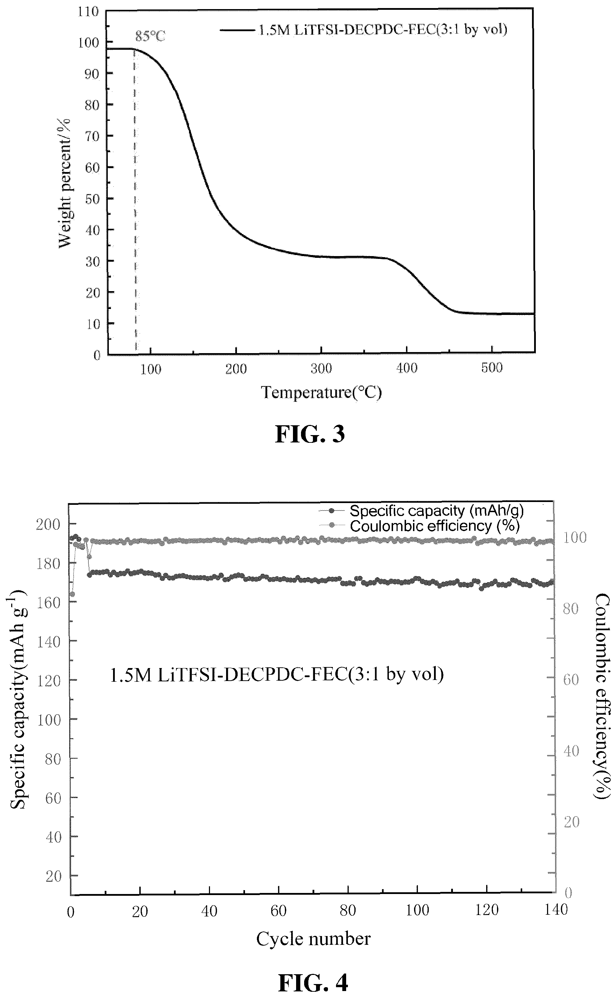

(3) FIG. 2 presents TGA results for cyclic carboxylate DECPDC. FIG. 3 shows TGA results for the electrolyte formulated with the cyclic carboxylate DECPDC.

FIG. 2 and FIG. 3 reveal high thermal decomposition temperatures for both the cyclic carboxylate DECPDC and the electrolyte, proving excellent thermal stability.

(4) FIG. 4 shows the cycling stability of an NCM811-Li coin cell assembled with the electrolyte for a high-voltage lithium-ion battery prepared in Example 17.

As indicated in FIG. 4, the NCM811-Li coin cell prepared from the electrolyte maintains 90% capacity retention after 200 cycles at 0.5C rate, demonstrating exceptional cycling stability.

Although the above embodiments have described the present disclosure in detail, they are only a part of, not all of, the embodiments of the present disclosure. Other embodiments may also be obtained by persons based on the embodiments without inventive efforts, and all of these embodiments shall fall within the scope of the present disclosure.

## Claims

1. An electrolyte for a high-voltage lithium-ion battery, comprising: a lithium salt, a carboxylate-based organic solvent, and an electrolyte additive; wherein
the carboxylate-based organic solvent comprises at least one selected from the group consisting of a linear carboxylate and a cyclic carboxylate;
the linear carboxylate has a structure shown in Formula I, and the cyclic carboxylate has a structure shown in Formula II; 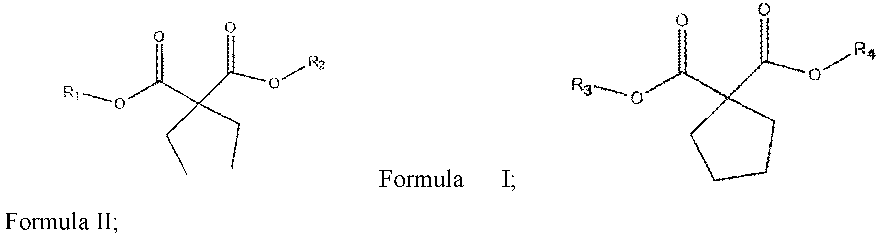 wherein R₁, R₂, R₃, and R₄ are independently C1-C5 alkyl;
the electrolyte additive comprises at least one selected from the group consisting of an ethylene carbonate (EC) derivative, propane sultone, and ethylene sulfate; and
the lithium salt comprises at least one selected from the group consisting of lithium tetrafluoroborate, lithium bis(fluorosulfonyl)imide (LiFSI), lithium bis(trifluoromethanesulfonyl)imide (LiTFSI), lithium hexafluoroarsenate, lithium perchlorate, lithium bis(oxalato)borate (LiBOB), and lithium difluoro(oxalato)borate (LiODFB).

2. The electrolyte for the high-voltage lithium-ion battery of claim 1, wherein R₁, R₂, R₃, and R₄ are independently C1-C3 alkyl.

3. The electrolyte for the high-voltage lithium-ion battery of claim 1, wherein the ethylene carbonate derivative comprises at least one selected from the group consisting of vinylene carbonate (VC), fluoroethylene carbonate (FEC), difluoroethylene carbonate (DFEC), and vinyl ethylene carbonate (VEC).

4. The electrolyte for the high-voltage lithium-ion battery of claim 1, wherein the lithium salt comprises at least one selected from the group consisting of the LiTFSI, the LiBOB, and the LiODFB.

5. The electrolyte for the high-voltage lithium-ion battery of claim 1, wherein the electrolyte for the high-voltage lithium-ion battery has a mass fraction of the lithium salt of 15% to 40%, a mass fraction of the carboxylate-based organic solvent of 40% to 80%, and a mass fraction of the electrolyte additive of 5% to 30%.

6. The electrolyte for the high-voltage lithium-ion battery of claim 5, wherein the electrolyte for the high-voltage lithium-ion battery has the mass fraction of the lithium salt of 15% to 30%, the mass fraction of the carboxylate-based organic solvent of 40% to 70%, and the mass fraction of the electrolyte additive of 10% to 20%.

7. A method for preparing the electrolyte for the high-voltage lithium-ion battery of any one of claims 1 to 6, comprising:
mixing the lithium salt, the carboxylate-based organic solvent, and the electrolyte additive in a protective atmosphere to obtain the electrolyte for the high-voltage lithium-ion battery.

8. The method of claim 7, wherein the mixing the lithium salt, the carboxylate-based organic solvent, and the electrolyte additive is conducted by: mixing the carboxylate-based organic solvent and the electrolyte additive, and then adding the lithium salt thereto, and mixing a resulting system with stirring at a temperature of 60°C to 80°C at a rotational speed of 300 rpm to 600 rpm.

9. Use of the electrolyte for the high-voltage lithium-ion battery of any one of claims 1 to 6 or the electrolyte for the high-voltage lithium-ion battery prepared by the method of claim 7 or 8 in a high-voltage lithium-ion battery.

10. A high-voltage lithium-ion battery, comprising a cathode, an anode, and an electrolyte, wherein the electrolyte is the electrolyte for the high-voltage lithium-ion battery of any one of claims 1 to 6 or the electrolyte for the high-voltage lithium-ion battery prepared by the method of claim 7 or 8.
